# FASCICULE DE BREVET EUROPEEN

(11) **EP 2 983 990 B1**
(45) Date de publication et mention de la délivrance du brevet: **18.10.2023**
(21) Numéro de dépôt: 14728843.5
(22) Date de dépôt: 10.04.2014
(51) Int. Cl.: B64D 45/00, B64D 47/08, H04N 7/18, B64C 1/14, B64D 25/14

(54) **PROCÉDÉ ET SYSTÈME DE VISUALISATION DE L'ENVIRONNEMENT EXTERNE D'UN AVION, AINSI QUE PORTE D'AVION EQUIPÉE D'UN TEL SYSTÈME.**
VERFAHREN UND SYSTEM ZUR ANZEIGE DER ÄUSSEREN UMGEBUNG EINES FLUGZEUGS UND FLUGZEUGTÜR MIT SOLCH EINEM SYSTEM
METHOD AND SYSTEM FOR DISPLAYING THE EXTERNAL ENVIRONMENT OF AN AIRCRAFT, AND AIRCRAFT DOOR EQUIPPED WITH SUCH A SYSTEM

(30) Priorité: 12.04.2013 FR 1353323
(43) Date de publication de la demande: 17.02.2016
(73) Titulaire: Latecoere, 31500 Toulouse (FR)
(72) Inventeur: BESETTES, Cyrille, 31660 Buzet-sur-Tarn (FR); GROUX, Laurent, 31280 Mons (FR); PERRIER, Christophe, 31200 Toulouse (FR)
(74) Mandataire: Junca, Eric
(86) Numéro de dépôt international: PCT/EP2014/057223
(87) Numéro de publication internationale: WO 2014/167038

(56) Documents cités:
- EP-A1- 0 230 473
- EP-A1- 0 980 828
- EP-A1- 2 495 168
- JP-A- 2002 240 798
- US-A- 4 816 828

## Description

### DOMAINE TECHNIQUE

L'invention concerne un procédé et un système apte à fournir une visualisation à l'intérieur d'un avion de l'environnement externe de cet avion, ainsi qu'une porte d'avion équipée de ce système de visualisation.

Dans les situations d'urgence où l'évacuation des passagers au sol est nécessaire, par exemple en cas d'incendie de l'avion, il est connu d'utiliser des toboggans qui viennent s'arrimer aux portes ou au fuselage de sortie d'urgence de l'avion. Afin de s'assurer que les conditions extérieures de l'avion permettent de déployer le toboggan en toute sécurité, une vision directe de l'environnement immédiat de l'avion est classiquement réalisée à travers un hublot par le personnel de l'appareil, une hôtesse de l'air ou un chef de cabine.

De plus, la vision de l'environnement proche de l'avion est utile pour éviter les collisions au sol, en particulier au niveau des extrémités d'aile lorsque l'avion est tracté en marche arrière, par exemple en zone parking, dans un hangar pour une révision ou lors d'une maintenance.

De manière générale, une vision de l'environnement de l'avion permet de surveiller les approches et d'anticiper certains risques ou d'éviter des situations dangereuses : par exemple lors du roulage sur les taxiway, notamment aux intersections de ceux-ci ou lors de croisement de deux appareils sur le même taxiway, présence d'obstacles sur la piste, présence d'objets ou engins a proximité, environnement suspect, etc.

### ETAT DE LA TECHNIQUE

La dimension d'un hublot dédié à la vision externe résulte d'un compromis entre les contraintes liées à la mise en place de ce hublot dans une porte ou le fuselage de l'avion et l'ouverture du champ de vision qui résulte de cette dimension.

Il est par ailleurs connu, par exemple du document de brevet GB 1290144, d'utiliser une caméra pour filmer des objets hors d'un avion à travers un hublot. Afin de capter le champ hors de l'axe de vue direct, un prisme pourvu d'une surface réfléchissante inclinée à 45° peut être utilisée entre le hublot et la caméra. Afin d'augmenter l'ouverture du champ observé, les surfaces d'entrée et de sortie du prisme sont courbes.

Pour observer la présence de glace ou de la présence de corps étranger sur les ailes d'un avion, le document de brevet US 6052056 décrit par ailleurs la transmission d'une lumière pulsée sur un capteur optique via un canal optique. Lorsque de l'eau, de la glace ou un liquide de dégivrage recouvre le capteur, une quantité variable de lumière pulsée est réfléchie et vient frapper un détecteur photosensible - par exemple des photodiodes - après avoir retraversé le canal optique. Les photodiodes fournissent alors un signal qui varie en fonction du type de détection, en nature et quantité.

Il est connu du document de brevet EP 0 980 828 un système d'assistance au roulage au sol d'un aéronef comportant au moins une caméra montée, extérieurement à l'aéronef, sur un dispositif mobile de compensation de mouvement. Cette solution ne vise pas à visualiser un environnement de l'aéronef, mais permet de suivre le déplacement de cet aéronef.

Les documents de brevet EP 2 495 168 et US 4816828 divulguent également des procédés pour assister au roulage au sol ou pour visualiser l'état d'un aéronef. Ces documents ne permettent pas davantage de visualiser un environnement d'aéronef.

Par ailleurs, le document de brevet EP 0 230 473 se rapporte à un système de surveillance d'une porte de maison comportant une caméra et des moyens d'éclairage afin d'identifier les personnes suspects et non dans le but de surveiller la sécurité d'une zone d'évacuation.

Ces documents ne permettent pas de répondre au problème de la visualisation de l'espace qui entoure l'avion avec un degré suffisant pour fournir une garantie d'observation (visualisation jour/nuit, conditions météorologiques dégradées, etc.) aussi bien de l'environnement immédiat de l'avion - en particulier pour contrôler avec précision l'impact au sol des toboggans lorsqu'ils sont déployés - que l'environnement des extrémités d'aile afin de pouvoir rectifier à temps la trajectoire de l'avion en cas de risque de collision.

### EXPOSE DE L'INVENTION

L'invention vise à réaliser une telle visualisation de l'environnement de l'avion en combinant une prise de vue directe et une illumination dans des gammes de rayonnement lumineuses appropriées à cet environnement, en liaison avec une visualisation apte à fournir une information immédiatement exploitable.

A ce titre, la présente invention a pour objet un procédé de visualisation de l'environnement externe d'un avion et consistant à remplacer un hublot de l'avion par au moins une ouverture réalisée dans au moins une porte de l'avion, à coupler mécaniquement un objectif de caméra de transmission d'un signal vidéo dans cette ouverture, de sorte que l'objectif capte directement la lumière provenant dudit environnement de l'avion. Cet environnement est préalablement illuminé par zone avec un éclairage directif dans au moins une gamme de rayonnement choisie en fonction des paramètres d'éclairage, lesdits paramètres d'éclairage comprenant des conditions de visibilité de l'environnement, des conditions météorologiques de cet environnement, des zones de sécurité entourant l'avion et de l'état d'orientation propre de l'avion. Le procédé consiste ensuite à transmettre le signal vidéo fourni par la (les) caméra(s) à au moins un écran de visualisation pour fournir une information multiple à partir de ce signal. L'information multiple se rapporte à l'état de fonctionnement des équipements de l'avion, et à la visualisation de zones de sécurité entourant l'avion dont l'éclairage est ajusté en fonction desdits paramètres d'éclairage.

Avantageusement, la caméra associée à l'éclairage permet de mesurer les conditions météorologiques sur la portée visuelle RVR (initiales de « Runway Visual Range » en terminologie anglaise) du pilote, en particulier en ciblant les ailettes d'extrémité (« winglets » en terminologie anglaise) afin de mesurer la RVR en automatique et en « local avion ».

Selon des modes préférés :
- la gamme de rayonnement est réglée entre la gamme de rayonnement infrarouge ou visible, en fonction des conditions météorologiques (jour/nuit ; conditions dégradées : brouillard, pluie, etc.) de l'environnement et de l'état d'orientation propre de l'avion tels qu'établis par un centre de pilotage équipant l'avion;
- la gamme de rayonnement est située dans le spectre du rayonnement visible lorsque le rayonnement solaire est supérieur à un seuil déterminé, en particulier en journée, et l'éclairage est dirigé vers au moins une zone d'évacuation des passagers pour les guider et/ou une zone entourant la (les) porte(s) afin de faciliter des activités de maintenance ;
- la gamme de rayonnement est située dans le rayonnement proche IR (infrarouge) afin de fournir une visualisation exploitable lorsque le rayonnement solaire est inférieur à un seuil déterminé, en particulier de nuit;
- au moins une double ouverture est réalisée dans au moins une porte de l'avion, chaque ouverture étant couplée mécaniquement à un objectif de caméra de sorte à réaliser au moins un traitement vidéo pour en trois dimensions (3D) ou 2D améliorée;
- la visualisation 3D est réalisée à travers chaque porte avant et chaque porte arrière de l'avion, pour évaluer la position des bouts d'aile au sol respectivement lorsque l'avion avance et lorsque l'avion recule, la distance par rapport à un obstacle, ou autre évaluation par rapport à l'environnement de l'avion;
- le signal vidéo peut également être transmis à un écran de visualisation installé dans le cockpit de pilotage de l'avion et/ou aux écrans d'un système vidéo équipant la cabine passagers, ce signal vidéo pouvant être accompagné d'informations complémentaires (évaluation des distances aux obstacles, reconnaissance de formes, etc.);
- le ou les écran(s) affiche(nt) également des messages d'information et/ou d'alerte en liaison avec l'état de fonctionnement des équipements de l'avion, en particulier le statut de(s) porte(s) (par exemple : verrouillée, bloquée ou fermée), l'état du système d'armement/désarmement du toboggan (réservoir d'azote, ...), le mode de commande de la caméra et de l'illumination (manuel ou automatique), et l'état des équipements pour la maintenance (état du moteur, du système de conditionnement d'air, etc.).

L'invention se rapporte également à un système de visualisation de l'environnement externe d'un avion comportant une cabine passagers, un cockpit, des ailes et des portes passagers et de service, ce système étant destiné à mettre en oeuvre le procédé défini ci-dessus. Un tel système comporte au moins une source d'illumination desdites zones de sécurité dudit environnement dans au moins une gamme de rayonnement, au moins une caméra vidéo munie d'un objectif apte à capter un ensemble de rayons lumineux provenant directement de l'environnement externe illuminé par la source pour fournir un signal vidéo correspondant audit environnement, et au moins un écran de visualisation en liaison avec la caméra pour recevoir le signal vidéo. La caméra, la source d'illumination et l'écran de visualisation sont reliés à une unité de calcul recevant des informations de l'état de fonctionnement des équipements de l'avion et lesdits paramètres de d'éclairage afin, respectivement, d'afficher lesdites informations sur l'écran de visualisation et d'illuminer l'environnement avec la gamme de rayonnement en fonction desdits paramètres d'éclairage.

Selon des modes de réalisation préférés :
- au moins une zone d'illumination entoure une zone d'impact de toboggan d'évacuation d'avion déterminé par l'unité de calcul, cette zone restant visualisée sur l'écran par prise en compte dans l'unité de calcul de l'état d'orientation des structures essentielles de l'avion, par exemple du train d'atterrissage, du fuselage et des nacelles moteur;
- la source d'illumination ou illuminateur est constituée par des diodes électroluminescentes ou LED d'éclairage dans le domaine du rayonnement visible ou infrarouge, agencées dans un boîtier pour éclairer une zone suffisamment large entourant la zone d'impact d'un toboggan d'évacuation d'une porte d'avion;
- une visualisation 3D est réalisée par un couple de caméras à travers une porte avant et une porte arrière de l'avion, pour évaluer la position de l'avion par rapport à son environnement lors de manoeuvres au sol, en particulier pour évaluer la position des bouts d'aile respectivement lorsque l'avion avance et lorsque l'avion recule ;
- le signal vidéo peut également être transmis à un écran de visualisation installé dans le cockpit de pilotage de l'avion et/ou à des écrans d'un système vidéo équipant la cabine passagers.

La présente invention a également pour objet une porte d'avion, à savoir porte passagers ou de service, comportant un système de verrouillage et un système d'ouverture/fermeture de porte par un bras d'articulation. Cette porte est équipée du système de visualisation défini ci-dessus comportant au moins une caméra vidéo HD.

De manière préférée, l'unité de calcul du système de visualisation est également destinée à piloter et coordonner les mouvements du bras d'articulation de la porte via un entraînement mécanique assisté ou un moteur électrique d'entraînement.

Avantageusement, l'illuminateur est composé d'un ensemble d'éclairage à LED, avantageusement agencé à proximité de la porte, et le(s) caméra(s) ainsi que l'écran de visualisation sont installés sur la porte, de préférence sensiblement en milieu de porte.

### BREVE DESCRIPTION DES FIGURES

D'autres caractéristiques et avantages de l'invention ressortiront à la lecture de la description qui suit et qui se rapporte à un exemple de réalisation, en référence aux figures annexées qui illustrent :
- les figures 1a et 1b, des vues en coupe de deux exemples de fixation de l'objectif d'une caméra vidéo à travers une porte d'avion;
- la figure 2, une vue frontale de la face intérieure d'un exemple de porte passagers équipée de deux caméras, d'un illuminateur IR/visible et d'un écran de visualisation ;
- la figure 2a, une vue en coupe latérale de l'illuminateur ;
- la figure 3, une vue perspective d'un environnement d'avion illustrant la portée du rayonnement lumineux de l'illuminateur sur l'impact au sol d'un toboggan d'évacuation déployé ;
- la figure 3a, un écran de visualisation de la vue prise par la caméra avec, en particulier, la visualisation de la zone d'impact du toboggan sur le sol, et
- les figures 4a et 4b, une vue supérieure et une vue latérale d'un avion dont les portes sont équipées de deux caméras de visualisation 3D.

### DESCRIPTION DETAILLEE

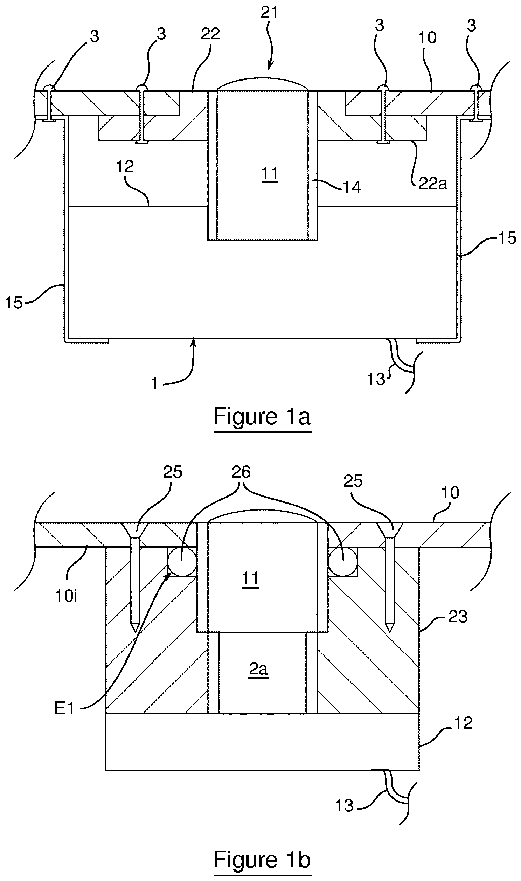

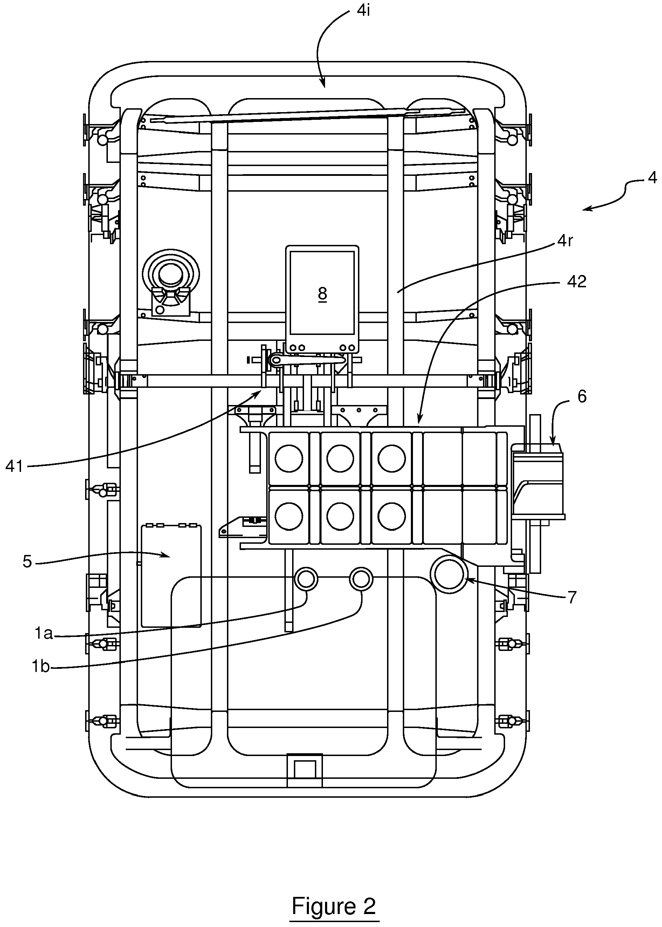

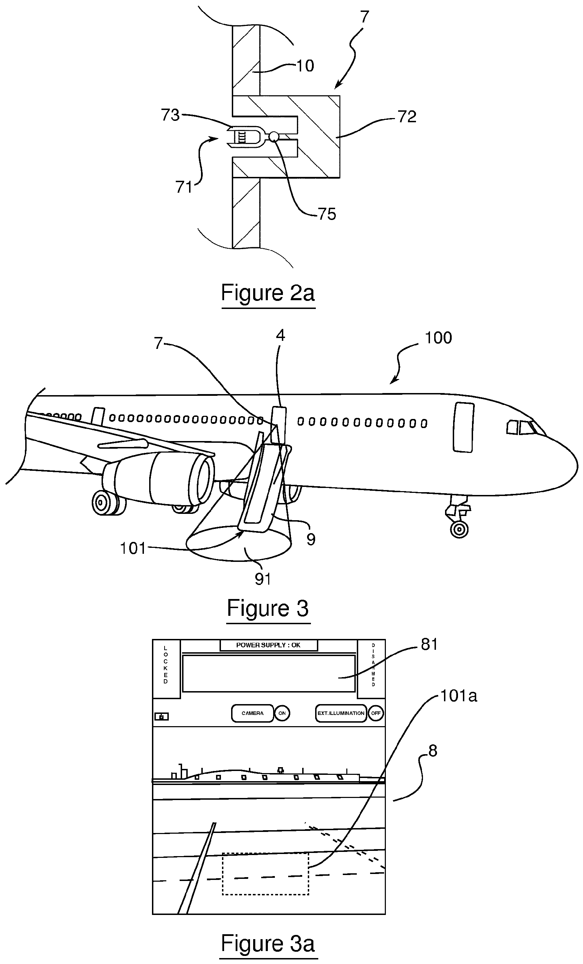

En référence à la vue en coupe de la figure 1a, la caméra vidéo HD (haute définition) 1 d'un exemple de système de visualisation selon l'invention comporte un objectif 11 et un boîtier électronique 12 contenant un capteur photosensible à couplage de charges (CCD) en liaison avec un collecteur ou, alternativement, un capteur CMOS, ce capteur photosensible étant couplé à un convertisseur de signal. En sortie de caméra, un câble 13 permet de transmettre un signal vidéo HD à un écran de visualisation (cf. figure 2).

L'objectif 11 est fixé dans une ouverture circulaire 21 d'une porte passagers de l'avion (non représentée). L'ouverture 21 est réalisée préalablement par découpage prévu à cet effet au niveau de la peau du fuselage 10. Un encadrement cylindrique 22 en même matériau que la peau 10 - ici en matériau composite - est prévu pour recevoir l'objectif 11 gainé par une bague d'adaptation 14. Alternativement, l'encadrement peut être formé dans un matériau différent de celui de la peau, par exemple en aluminium.

L'encadrement 22 présente une portion élargie 22a traversée par des rivets 3 de fixation (ou autres moyens de fixation : vis, etc.) à la peau 10. La bague 14 et l'encadrement 22 sont assemblés ensemble via un couplage de type filetage/taraudage ou équivalent (clipsage, joint, etc.). De plus, le boîtier électronique 12 est avantageusement fixé à la peau 10 par des attaches latérales 15.

En variante, comme illustré par la figure 1b qui désigne les éléments identiques ou équivalents de la figure 1a par les mêmes signes de référence, l'encadrement 22 est remplacé par un boitier 23. Ce boîtier 23 est traversé par un alésage 2a adapté pour loger l'objectif 11. Le couplage entre l'objectif 11 et la peau 10 est du même type que le couplage entre l'objectif 11 et l'encadrement 22 de la figure 1.

Par ailleurs, le boîtier 23 vient en appui périphérique contre la face interne 10i de la peau 10 et est fixé à cette peau 10 par des vis appropriées 25. Un joint torique 26 est logé dans un espace E1 formé entre le boîtier 23 et la peau 10 pour réaliser une liaison étanche entre le boitier 23 et la peau 10.

En référence à la vue frontale de la figure 2, la face intérieure 4i d'un exemple de porte passagers 4, équipée de deux caméras 1A et 1B, d'un illuminateur IR/visible 7 et d'un écran de visualisation 8, est illustrée. La structure de la porte 4 est constituée d'une peau 10 renforcée de raidisseurs 4r dans le cas où - comme dans l'exemple illustré - l'épaisseur de la porte 4 est trop fine pour assurer une rigidité suffisante. Dans d'autres modes de réalisation, la porte d'épaisseur suffisante peut être auto-rigide et s'affranchir de renfort.

La porte passagers 4 comporte un système de verrouillage à cran de sûreté 41, un système d'ouverture/fermeture de porte par un bras d'articulation 42, et une unité de calcul de porte 5 destiné à piloter et coordonner les mouvements de la porte 4. L'unité de calcul 5 pilote et coordonne également les mouvements du bras d'articulation de porte 42 par un moteur électrique d'entraînement 6.

Cette porte 4 est équipée de deux caméras vidéo de visualisation HD 1a et 1b, chaque caméra étant agencée de la manière décrite ci-dessus à travers des ouvertures de porte 21. Les caméras ainsi que l'écran de visualisation sont installés sensiblement en milieu de porte, les caméras 1a et 1b sous le bras 42 et l'écran 8 au-dessus du bras 42.

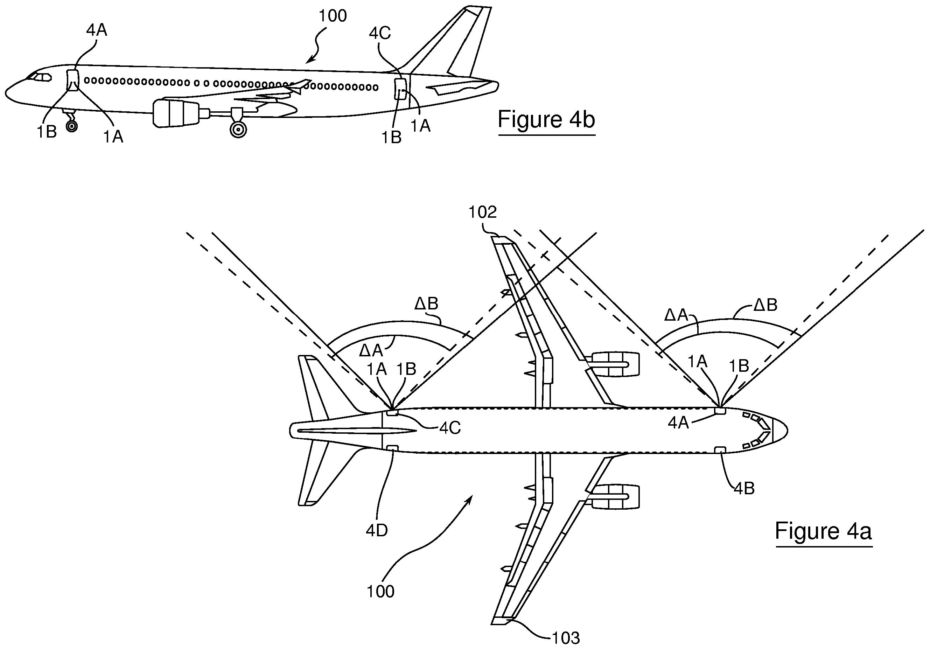

La distance entre les caméras 1a et 1b est calculée de sorte à permettre le traitement des signaux vidéo HD en mode tridimensionnel (3D) par l'unité de calcul 5. Un tel traitement permet de mesurer avec précision les distances entre objets, en particulier entre l'extrémité des ailes et les structures environnantes comme exposé plus loin en liaison avec la figure 4a.

L'écran de visualisation 8 affiche également des messages d'information et/ou d'alerte en liaison avec l'état de fonctionnement des équipements de l'avion, à savoir : le statut des portes - verrouillée, bloquée ou fermée -, l'état du système d'armement/désarmement du toboggan, niveau du réservoir d'azote -, le mode de commande de la caméra et de l'illumination - manuel ou automatique - et la maintenance (état du moteur, du système de détection roulis/tangage, état de fonctionnement du capteur météorologique) et équivalent.

Un illuminateur 7, constitué d'un boîtier à LED 71 et d'une douille support 72, est agencé à travers la porte 4, comme montré par la vue en coupe latérale de la figure 2a. La douille support 72 est de forme cylindrique pour s'emboîter et se fixer dans une ouverture correspondante formée dans la peau 10 de la porte 4, d'une façon analogue à l'objectif des caméras.

Le boîtier à LED 71 forme une partie d'éclairage directive par la présence d'un cache à ouverture angulaire variable 73 qui canalise le rayonnement vers une zone de l'environnement externe. Cette partie 71 est couplée à la douille support 72.

L'illuminateur 7 est disposé dans la porte 4 (figure 2). Les LED peuvent fonctionner dans deux gammes de rayonnement d'éclairage, couvrant le domaine visible et le domaine IR. Les données de roulis/tangage sont fournies à l'unité de calcul depuis un centre de pilotage par un câblage approprié afin de conserver le cadrage de la zone d'impact du toboggan (voir ci-après). L'unité de calcul 5 active automatiquement le rayonnement de l'éclairage dans la gamme infrarouge - tant que l'avion est en déplacement au sol (pour permettre au personnel de visualiser correctement les conditions extérieures) - puis dans le visible dès que la porte est ouverte (pour éclairer le chemin d'évacuation des passagers sur le toboggan).

La figure 3 illustre plus précisément un environnement d'avion 100 lorsqu'un toboggan 9 est déployé pour une évacuation des passagers à partir de la porte 4. La portée de l'illuminateur 7 permet d'éclairer une zone d'évacuation 91 suffisamment large pour entourer la zone d'impact au sol 101 du toboggan d'évacuation 9.

La zone illuminée 91 permet de cibler la zone d'impact 101 et de conserver la visualisation 101a de cette zone sur l'écran 8, comme représentée sur la figure 3a. Sur cet écran 8, l'image comporte également un tableau de bord 81 qui fournit les principales informations de sécurité : état de fermeture des portes, état de pressurisation de la cabine, état de l'illumination externe, état de désarmement du toboggan, etc.

Lorsque les conditions de visibilité sont correctes, en particulier de jour, la gamme de rayonnement de l'illuminateur 7 se trouve dans le visible et l'éclairage reste dirigé vers la zone d'évacuation des passagers 91 pour les guider. Avantageusement, une zone entourant la porte 4 est éclairée par l'illuminateur 7 afin de faciliter des activités de maintenance.

La gamme de rayonnement est située dans le rayonnement proche IR (infrarouge) afin de fournir une visualisation exploitable lorsque les conditions de visibilité de l'environnement ne permettent pas une visibilité suffisante dans la gamme de rayonnement visible.

Les figures 4a et 4b illustrent respectivement une vue supérieure et une vue latérale de l'avion 100 dont les portes 4A à 4D sont chacune équipées de deux caméras 1A et 1B de visualisation 3D en haute définition (HD), chaque caméra étant identique à la caméra 1 de la figure 1. Ainsi, comme décrit précédemment en référence à la figure 2, les objectifs 11 des caméras 1A, 1B d'une même porte sont montés à travers des ouvertures 21 à une distance permettant d'effectuer, grâce au calculateur, de la visualisation 3D HD par un traitement des signaux vidéo, afin de déterminer les distances, notamment en profondeur, ce que ne permettrait pas de faire une seule caméra.

La visualisation 3D HD est ainsi réalisée par chaque couple de caméras 1A, 1B à travers une double ouverture de chacune des portes avant 4A et 4B et chacune des portes arrière 4C et 4D de l'avion, avec de larges ouvertures angulaires ΔA et ΔB. Les caméras arrière étant dirigées dans l'exemple illustré de sorte à pouvoir visualiser également les extrémités d'ailes 102 et 103. La position des extrémités d'aile 102 et 103 est ainsi évaluée au sol, respectivement lorsque l'avion avance et lorsque l'avion recule, par le traitement des signaux vidéo par l'unité de calcul 5 (figure 2) et fournis par les caméras 1A, 1B.

L'invention n'est pas limitée aux exemples décrits et représentés. En particulier, le (ou les) signaux vidéo peut (peuvent) également être transmis à un écran de visualisation installé dans le cockpit de pilotage de l'avion et/ou aux écrans d'un système vidéo équipant la cabine passagers.

De plus, la visualisation 3D peut être utile lorsque l'avion est amené à réaliser des manoeuvres plus complexes au sol, par exemple lorsqu'il doit négocier des virages. L'utilisation de deux caméras par porte peut également être utile pour la transmission avion en cas de défaillance du des équipements électroniques.

La visualisation 3D peut être remplacée par une visualisation 2D améliorée par une indication de la profondeur par une symbolique adaptée, par exemple un code couleur ou équivalent sur l'écran de visualisation.

Avantageusement, le système de visualisation selon l'invention peut être utilisé aussi bien en conditions d'ouverture d'urgence de porte qu'en fonctionnement nominal, par exemple pour détecter la présence d'une passerelle ou d'un opérateur intervenant en face de la porte.

Par ailleurs, le ou les écran(s) affiche(nt) également des messages d'information et/ou d'alerte en liaison avec l'état de fonctionnement des équipements de l'avion choisi parmi le statut de(s) porte(s) (par exemple : verrouillée, bloquée ou fermée), l'état du système d'armement/désarmement du toboggan (réservoir d'azote, ...), le mode de commande de la caméra et de l'illumination (manuel ou automatique) et/ou la maintenance (état du moteur, du système de détection, etc.).

## Revendications

1. Procédé de visualisation de l'environnement externe d'un avion (100), qui consiste à remplacer un hublot de l'avion par au moins une ouverture (21) réalisée dans au moins une porte (4) de l'avion, à coupler mécaniquement un objectif (11) de caméra (1 ; 1a, 1b; 1A, 1B) de transmission d'un signal vidéo dans cette ouverture (21), de sorte que l'objectif (11) capte directement la lumière provenant dudit environnement de l'avion (100), à illuminer préalablement cet environnement par zone (91) avec un rayonnement directif dans au moins une gamme de rayonnement choisie en fonction des paramètres d'éclairage, lesdits paramètres d'éclairage comprenant des conditions de visibilité de l'environnement, des conditions météorologiques de cet environnement, des zones de sécurité entourant l'avion et de l'état d'orientation propre de l'avion, et à transmettre le signal vidéo fourni par la (les) caméra(s) (1 ; 1a, 1b ; 1A, 1B) à au moins un écran de visualisation (8) pour fournir une information multiple à partir de ce signal, l'information multiple se rapportant à l'état de fonctionnement des équipements de l'avion (100) et à la visualisation de zones de sécurité (91 ; ΔA, ΔB) entourant l'avion (100) dont l'éclairage est ajusté en fonction desdits paramètres d'éclairage.

2. Procédé de visualisation selon la revendication 1, dans lequel la gamme de rayonnement est réglée entre la gamme de rayonnement infrarouge ou visible, en fonction des conditions météorologiques de l'environnement et de l'état d'orientation propre de l'avion (100) tels qu'établis par un centre de pilotage équipant l'avion (100).

3. Procédé de visualisation selon l'une quelconque des revendications 1 ou 2, dans lequel la gamme de rayonnement est située dans le spectre du rayonnement visible lorsque le rayonnement solaire est supérieur à un seuil déterminé, en particulier en journée, et l'éclairage est dirigé vers au moins une zone d'évacuation des passagers (91) pour les guider et/ou une zone entourant la (les) porte(s) afin de faciliter des activités de maintenance.

4. Procédé de visualisation selon l'une quelconque des revendications 1 ou 2, dans lequel la gamme de rayonnement est située dans le rayonnement proche IR (infrarouge) afin de fournir une visualisation exploitable lorsque le rayonnement solaire est inférieur à un seuil déterminé, en particulier de nuit.

5. Procédé de visualisation selon l'une quelconque des revendications précédentes, dans lequel au moins une double ouverture est réalisée dans au moins une porte (4A à 4D) de l'avion (100), chaque ouverture (21) étant couplée mécaniquement à un objectif de caméra (1a, 1b ; 1A, 1B) de sorte à réaliser au moins un traitement vidéo pour trois dimensions (3D) ou 2D améliorée.

6. Procédé de visualisation selon l'une quelconque des revendications précédentes, dans lequel le signal vidéo peut également être transmis à un écran de visualisation installé dans le cockpit de pilotage de l'avion (100) et/ou à des écrans d'un système vidéo équipant la cabine passagers.

7. Procédé de visualisation selon la revendication précédente, dans lequel le ou les écran(s) (8) affiche(nt) également des messages d'information et/ou d'alerte en liaison avec l'état de fonctionnement des équipements de l'avion (100), en particulier le statut de(s) porte(s), l'état du système d'armement/désarmement du toboggan (9), le mode de commande manuel ou automatique de la caméra (1 ; 1a, 1b ; 1A, 1B) et de l'illumination (91), et/ou l'état des équipements pour la maintenance.

8. Système de visualisation de mise en oeuvre du procédé selon l'une quelconque des revendications précédentes, dans lequel l'environnement est externe d'un avion (100) comportant une cabine passagers, un cockpit, des ailes et des portes passagers et de service (4 ; 4A à 4D), comportant au moins une source d'illumination desdites zones de sécurité (7) dudit environnement dans au moins une gamme de rayonnement, au moins une caméra vidéo (1 ; 1a, 1b ; 1A, 1B) munie d'un objectif (11) apte à capter un ensemble de rayons lumineux provenant directement de l'environnement externe illuminé par la source (7) pour fournir un signal vidéo correspondant audit environnement, et au moins un écran de visualisation (8) en liaison avec la caméra (1 ; 1a, 1b ; 1A, 1B) pour recevoir le signal vidéo, **caractérisé en ce que** la caméra (1 ; 1a, 1b ; 1A, 1B), la source d'illumination (7) et l'écran de visualisation (8 sont reliés à une unité de calcul (5) recevant des informations de l'état de fonctionnement des équipements de l'avion (100) et lesdits paramètres d'éclairage afin, respectivement, d'afficher lesdites informations sur l'écran de visualisation et d'illuminer l'environnement avec la gamme de rayonnement en fonction desdits paramètres d'éclairage.

9. Système de visualisation selon la revendication précédente, dans lequel au moins une zone d'illumination (91) entoure une zone d'impact (101) de toboggan d'évacuation (9) d'avion déterminé par l'unité de calcul et est ajustée en position par les conditions de visibilité de l'environnement et de l'état d'orientation des structures essentielles de l'avion (100) défini par un système de capteurs d'environnement de l'avion.

10. Système de visualisation selon l'une quelconque des revendications 8 ou 9, dans lequel la source d'illumination ou illuminateur (7) est constituée par des diodes électroluminescentes ou LED d'éclairage dans le domaine du rayonnement visible ou infrarouge, agencées dans un boîtier (71) pour éclairer une zone (91) suffisamment large entourant la zone d'impact (101) d'un toboggan d'évacuation (9) d'une porte d'avion (4, 4A à 4D).

11. Système de visualisation selon l'une quelconque des revendications 8 à 10, dans lequel une visualisation 3D est réalisée par un couple de caméras (1A, 1B) à travers une porte avant(4A, 4B) et une porte arrière (4C, 4D) de l'avion (100), pour évaluer la position de l'avion (100) par rapport à son environnement lors de manoeuvres au sol.

12. Système de visualisation selon l'une quelconque des revendications 8 à 11, dans lequel le signal vidéo est également transmis à un écran de visualisation installé dans le cockpit de pilotage de l'avion (100) et/ou aux écrans d'un système vidéo équipant la cabine passagers.

13. Porte d'avion, porte passagers ou de service, comportant un système de verrouillage (41) et un système d'ouverture/fermeture de porte (4) par un bras d'articulation (42), **caractérisée en ce qu'**elle est équipée du système de visualisation selon l'une quelconque des revendications 8 à 12.

14. Porte d'avion selon la revendication précédente, dans laquelle l'unité de calcul (5) du système de visualisation est également destinée à piloter et coordonner les mouvements du bras d'articulation (42) de la porte (4) via un entraînement mécanique assisté ou un moteur électrique d'entraînement (6).

15. Porte d'avion selon l'une quelconque des revendications 13 ou 14, dans laquelle l'illuminateur (7) est composé d'un ensemble d'éclairage à LED ou laser agencé à proximité de la porte, et le(s) caméra(s) (1a, 1b ; 1A, 1B) ainsi que l'écran de visualisation (8) sont installés sur la porte (4, 4A à 4D).

## Patentansprüche

1. Verfahren zur Anzeige der Außenumgebung eines Flugzeugs (100), das darin besteht, ein Fenster des Flugzeugs durch mindestens eine Öffnung (21) zu ersetzen, die in mindestens einer Tür (4) des Flugzeugs hergestellt wird, ein Objektiv (11) einer Kamera (1; 1a, 1b; 1A, 1B) zur Übertragung eines Videosignals in dieser Öffnung (21) mechanisch zu koppeln, so dass das Objektiv (11) direkt das von der Umgebung des Flugzeugs (100) kommende Licht auffängt, diese Umgebung vorher zonenweise (91) mit einer Richtstrahlung in mindestens einem Strahlungsbereich zu beleuchten, der abhängig von den Beleuchtungsparametern, wobei die Beleuchtungsparameter Sichtbedingungen der Umgebung, Witterungsverhältnisse dieser Umgebung, das Flugzeug umgebende Sicherheitszonen enthalten, und vom eigenen Ausrichtungszustand des Flugzeugs ausgewählt wird, und das von der(den) Kamera(s) (1; 1a, 1b; 1A, 1B) gelieferte Videosignal an mindestens einen Anzeigebildschirm (8) zu übertragen, um ausgehend von diesem Signal eine Mehrfachinformation zu liefern, wobei die Mehrfachinformation sich auf den Betriebszustand der Ausrüstungen des Flugzeugs (100) und auf die Anzeige von das Flugzeug (100) umgebenden Sicherheitszonen (91; ΔA, ΔB) bezieht, deren Beleuchtung abhängig von den Beleuchtungsparametern angepasst wird.

2. Anzeigeverfahren nach Anspruch 1, wobei der Strahlungsbereich zwischen dem Infrarot- oder dem sichtbaren Strahlungsbereich abhängig von den Witterungsverhältnissen der Umgebung und dem eigenen Ausrichtungszustand des Flugzeugs (100) eingestellt wird, wie sie von einem das Flugzeug (100) bestückenden Steuerzentrum erstellt werden.

3. Anzeigeverfahren nach einem der Ansprüche 1 oder 2, wobei der Strahlungsbereich sich im Spektrum der sichtbaren Strahlung befindet, wenn die Sonnenstrahlung über einer bestimmten Schwelle liegt, insbesondere tagsüber, und die Beleuchtung zu mindestens einer Evakuierungszone der Passagiere (91), um sie zu leiten, und/oder zu einer die Tür(en) umgebenden Zone gerichtet ist, um Wartungsaktivitäten zu vereinfachen.

4. Anzeigeverfahren nach einem der Ansprüche 1 oder 2, wobei der Strahlungsbereich sich in der nahen IR-Strahlung (Infrarot) befindet, um eine verwertbare Anzeige zu liefern, wenn die Sonnenstrahlung niedriger als eine bestimmte Schwelle ist, insbesondere nachts.

5. Anzeigeverfahren nach einem der vorhergehenden Ansprüche, wobei mindestens eine doppelte Öffnung in mindestens einer Tür (4A bis 4D) des Flugzeugs (100) hergestellt wird, wobei jede Öffnung (21) mechanisch mit einem Kameraobjektiv (1a, 1b; 1A, 1B) gekoppelt ist, um mindestens eine Videoverarbeitung für drei Dimensionen (3D) oder verbessertes 2D durchzuführen.

6. Anzeigeverfahren nach einem der vorhergehenden Ansprüche, wobei das Videosignal ebenfalls an einen im Cockpit des Flugzeugs (100) installierten Anzeigebildschirm und/oder an Bildschirme eines Videosystems übertragen werden kann, das im Passagierraum eingebaut ist.

7. Anzeigeverfahren nach dem vorhergehenden Anspruch, wobei der oder die Bildschirm(e) ebenfalls Informations- und/oder Warnnachrichten in Verbindung mit dem Betriebszustand der Ausrüstungen des Flugzeugs (100) anzeigen, insbesondere der Status der Tür(en), der Zustand des Aktivierungs-/Deaktivierungssystems der Notrutsche (9), der manuelle oder automatische Steuermodus der Kamera (1; 1a, 1b; 1A, 1B) und der Beleuchtung (91), und/oder der Zustand der Ausrüstungen für die Wartung.

8. Anzeigesystem der Durchführung des Verfahrens nach einem der vorhergehenden Ansprüche, wobei die Umgebung außerhalb eines Flugzeugs (100) ist, das einen Passagierraum, ein Cockpit, Flügel und Passagier- und Diensttüren (4; 4A bis 4D) aufweist, das mindestens eine Beleuchtungsquelle der Sicherheitszonen (7) der Umgebung in mindestens einem Strahlungsbereich, mindestens eine Videokamera (1; 1a, 1b; 1A, 1B) versehen mit einem Objektiv (11), das eine Einheit von Lichtstrahlen auffangen kann, die direkt von der von der Quelle (7) beleuchteten Außenumgebung kommen, um ein der Umgebung entsprechendes Videosignal zu liefern, und mindestens einen Anzeigebildschirm (8) in Verbindung mit der Kamera (1; 1a, 1b; 1A4, 1B) aufweist, um das Videosignal zu empfangen, **dadurch gekennzeichnet, dass** die Kamera (1; 1a, 1b; 1A, 1B), die Beleuchtungsquelle (7) und der Anzeigebildschirm (8) mit einer Recheneinheit (5) verbunden sind, die Informationen über den Betriebszustand der Ausrüstungen des Flugzeugs (100) und die Beleuchtungsparameter empfängt, um die Informationen auf dem Anzeigebildschirm anzuzeigen bzw. die Umgebung mit dem Strahlungsbereich abhängig von den Beleuchtungsparametern zu beleuchten.

9. Anzeigesystem nach dem vorhergehenden Anspruch, wobei mindestens eine Beleuchtungszone (91) eine Aufprallzone (101) der Flugzeug-Notrutsche (9) umgibt, die von der Recheneinheit bestimmt und von den Sichtbedingungen der Umgebung und dem Ausrichtungszustand der Hauptstrukturen des Flugzeugs (100) in Position angepasst wird, der von einem System von Umgebungssensoren des Flugzeugs definiert wird.

10. Anzeigesystem nach einem der Ansprüche 8 oder 9, wobei die Beleuchtungsquelle oder Beleuchtungsvorrichtung (7) von Elektrolumineszenzdioden oder Beleuchtungs-LED im sichtbaren oder Infrarot-Strahlungsbereich gebildet wird, die in einem Gehäuse (71) angeordnet sind, um eine ausreichend große Zone (91) zu beleuchten, die die Aufprallzone (101) einer Notrutsche (9) einer Flugzeugtür (4, 4A bis 4D) umgibt.

11. Anzeigesystem nach einem der Ansprüche 8 bis 10, wobei eine 3D-Anzeige von einem Paar von Kameras (1A, 1B) durch eine vordere Tür (4A, 4B) und eine hintere Tür (4C, 4D) des Flugzeugs (100) durchgeführt wird, um die Position des Flugzeugs (100) bezüglich seiner Umgebung bei Manövern am Boden zu ermitteln.

12. Anzeigesystem nach einem der Ansprüche 8 bis 11, wobei das Videosignal ebenfalls an einen im Cockpit des Flugzeugs (100) installierten Anzeigebildschirm und/oder an die Bildschirme eines in den Passagierraum eingebauten Videosystems übertragen wird.

13. Flugzeugtür, Passagier- oder Diensttür, die ein Verriegelungssystem (41) und/oder ein Öffnungs- /Schließsystem der Tür (4) durch einen Gelenkarm (42) aufweist, **dadurch gekennzeichnet, dass** sie mit dem Anzeigesystem nach einem der Ansprüche 8 bis 12 ausgestattet ist.

14. Flugzeugtür nach dem vorhergehenden Anspruch, wobei die Recheneinheit (5) des Anzeigesystems ebenfalls dazu bestimmt ist, die Bewegungen des Gelenkarms (42) der Tür (4) mittels eines mechanischen Servoantriebs oder eines elektrischen Antriebsmotors (6) zu steuern und zu koordinieren.

15. Flugzeugtür nach einem der Ansprüche 13 oder 14, wobei die Beleuchtungsvorrichtung (7) aus einer LED- oder Laser-Beleuchtungseinheit besteht, die in der Nähe der Tür angeordnet ist, und die Kamera(s) (1a, 1b; 1A, 1B) sowie der Anzeigebildschirm (8) auf der Tür (4, 4A bis 4D) installiert sind.

## Claims

1. Method for displaying the external environment of an aeroplane (100), which consists in replacing a window of the aeroplane with at least one aperture (21) produced in at least one door (4) of the aeroplane, in mechanically coupling a lens (11) of a camera (1; 1a, 1b; 1A, 1B) for transmitting a video signal in this aperture (21), such that the lens (11) directly picks up the light originating from said environment of the aeroplane (100), in previously illuminating this environment zonally (91) with a directional radiation in at least one range of radiation chosen as a function of the lighting parameters, said lighting parameters comprising conditions of visibility of the environment, weather conditions of this environment, safety zones around the aeroplane and the specific state of orientation of the aeroplane, and in transmitting the video signal supplied by the camera or cameras (1; 1a, 1b; 1A, 1B) to at least one display screen (8) to provide multiple information from this signal, the multiple information relating to the state of operation of the equipment of the aeroplane (100) and to the display of safety zones (91; ΔA, ΔB) around the aeroplane (100) for which the lighting is adjusted as a function of said lighting parameters.

2. Display method according to Claim 1, wherein the range of radiation is set between the infrared or visible radiation range, as a function of the weather conditions of the environment and of the specific state of orientation of the aeroplane (100) as established by a piloting centre with which the aeroplane (100) is equipped.

3. Display method according to either one of Claims 1 and 2, wherein the radiation range is situated in the visible radiation spectrum when the solar radiation is greater than a determined threshold, in particular in daytime, and the lighting is directed towards at least one passenger evacuation zone (91) to guide said passengers and/or a zone around the door or doors in order to facilitate maintenance activities.

4. Display method according to either one of Claims 1 and 2, wherein the radiation range is situated in the near IR (infrared) radiation in order to provide a usable display when the solar radiation is below a determined threshold, in particular at night.

5. Display method according to any one of the preceding claims, wherein at least one dual aperture is produced in at least one door (4A to 4D) of the aeroplane (100), each aperture (21) being mechanically coupled to a camera lens (1a, 1b; 1A, 1B) so as to perform at least one three-dimensional (3D) or enhanced 2D video processing operation.

6. Display method according to any one of the preceding claims, wherein the video signal can also be transmitted to a display screen installed in the piloting cockpit of the aeroplane (100) and/or to screens of a video system with which the passenger cabin is equipped.

7. Display method according to the preceding claim, wherein the display screen or screens (8) display also information and/or alert messages associated with the state of operation of the equipment of the aeroplane (100), in particular the status of the door or doors, the state of the system for arming/disarming the slide (9), the manual or automatic mode of control of the camera (1; 1a, 1b; 1A, 1B) and the illumination (91), and/or the state of the equipment for maintenance.

8. Display system for implementing the method according to any one of the preceding claims, wherein the environment is external to an aeroplane (100) comprising a passenger cabin, a cockpit, wings and passenger and service doors (4; 4A to 4D), comprising at least one source of illumination of said safety zones (7) of said environment in at least one radiation range, at least one video camera (1; 1a, 1b; 1A, 1B) provided with a lens (11) capable of picking up a set of light rays originating directly from the external environment illuminated by the source (7) to form a video signal corresponding to said environment and at least one display screen (8) linked with the camera (1; 1a, 1b; 1A, 1B) to receive the video signal, **characterized in that** the camera (1; 1a, 1b; 1A, 1B), the illumination source (7) and the display screen (8) are linked to a computation unit (5) receiving information on the state of operation of the equipment of the aeroplane (100) and said lighting parameters in order, respectively, to display said information on the display screen and illuminate the environment with the radiation range as a function of said lighting parameters.

9. Display system according to the preceding claim, wherein at least one illumination zone (91) surrounds a zone of impact (101) of an aeroplane evacuation slide (9) determined by the computation unit and is adjusted in position by the conditions of visibility of the environment and the state of orientation of the essential structures of the aeroplane (100) defined by a system of environment sensors of the aeroplane.

10. Display system according to either one of Claims 8 and 9, wherein the illumination source or illuminator (7) is composed of light-emitting diodes or LEDs for lighting in the visible or infrared radiation range, arranged in a housing (71) to light a zone (91) that is sufficiently wide around the zone of impact (101) of an evacuation slide (9) of an aeroplane door (4, 4A to 4D).

11. Display system according to any one of Claims 8 to 10, wherein a 3D display is produced by a pair of cameras (1A, 1B) through a front door (4A, 4B) and a rear door (4C, 4D) of the aeroplane (100), to assess the position of the aeroplane (100) with respect to its environment during manoeuvres on the ground.

12. Display system according to any one of Claims 8 to 11, wherein the video signal is also transmitted to a display screen installed in the piloting cockpit of the aeroplane (100) and/or to the screens of a video system with which the passenger cabin is equipped.

13. Aeroplane door, passenger door or service door, comprising a locking system (41) and a door (4) opening/closing system using an articulation arm (42), **characterized in that** it is equipped with the display system according to any one of Claims 8 to 12.

14. Aeroplane door according to the preceding claim, wherein the computation unit (5) of the display system is also intended to control and coordinate the movements of the articulation arm (42) of the door (4) via an assisted mechanical drive or an electrical drive motor (6).

15. Aeroplane door according to either one of Claims 13 and 14, wherein the illuminator (7) is composed of an LED or laser lighting assembly arranged in proximity to the door, and the camera or cameras (1; 1a, 1b; 1A, 1B) as well as the display screen (8) are installed on the door (4, 4A to 4D).
